# EUROPEAN PATENT SPECIFICATION

(11) **EP 1 275 335 B1**
(45) Date of publication and mention of the grant of the patent: **14.06.2006**
(21) Application number: 02008003.2
(22) Date of filing: 10.04.2002
(51) Int. Cl.: A47L 15/42

(54) **System for controlling the hardness of the washing water in a washing machine and control method thereof**
Vorrichtung und Verfahren zum Kontrollieren der Wasserhärte einer Waschmaschine
Dispositif et procédé pour contrôler la dureté de l'eau dans une machine à laver

(30) Priority: 11.04.2001 IT TO010353
(43) Date of publication of application: 15.01.2003
(73) Proprietor: T & P S.p.A., 21049 Tradate (Varese) (IT)
(72) Inventor: Carli, Carlo, 21041 Albizzate (VA) (IT); Ghinato, Renzo, 21050 Bisuschio (VA) (IT)
(74) Representative: Dini, Roberto

(56) References cited:
- EP-A- 1 161 916
- WO-A-01/18298
- DE-A- 3 527 182
- GB-A- 1 029 526
- US-A- 4 385 992

## Description

The present invention relates to a system for controlling wash water hardness in a washing machine, in particular a dishwasher, and control method thereof.

As known, dishwashing machines are equipped with a water softening device containing ionic exchange resins for reducing the water hardness and prevent calcareous deposits on the crockery.

After a certain number of water softening cycles, the resins exhaust their softening capacity and it is necessary to regenerate them. In order to perform regeneration, the resins are commonly flushed with a water and salt solution, hereafter called brine.

Therefore, after the water has been in contact with the softening resins, the hardness of the water supplied to the washing tub will change depending on resins exhaustion, i.e. reduction of the water hardness decreases with resins exhaustion.

Should the water supplied from the water system already have a low hardness value, it will be further reduced by the water flowing through the resins of the water softener and reach such levels capable of causing washing problems.

In fact, a water with too low hardness value have such an acidity that may damage drink glasses during the washing; also, should too much washing agent be used for the washing, an extreme bubbles formation, i.e. excessive foam may ensue, due to the surface tension of the water being too low.

Excessive foam formation caused by the washing agent will cause problems, such as a difficult triggering of the circulation pump for the washing water, pump cavitation, with increased noisiness of the washing machine, damages to the pump electric motor, poor washing of the crockery because of the low flow-rate to the hydraulic circuit downstream the pump not ensuring a correct speed for water spraying on the crockery.

Washing machines are known, in which the wash water hardness is substantially maintained constant within certain limits so as to reduce salt consumption. This situation is obtained mixing the water supplied to the washing tub of the machine from the softening device, with the water from the water system, the latter having a higher hardness. Such washing machines are known for example from GB1029526A.

The mixing ratio of the softened water with the hard water from the water system is controlled by means of an electronic programmer; in function of a certain quantity of water supplied to the washing machine, before the water is softened, the programmer will divert a portion of it directly to the washing tub for mixing with the water from the softening device.

The quantity of water required for the electronic programmer to operate, measured by means of a water meter, depending on the softening and exhaustion features of the resins in the softening device. In other words, since the first softening cycle is performed with fully efficient resins and hardness reduction of the water flowing through the resins is at its maximum, mixing with harder water will be necessary to obtain an optimal hardness degree, whereas with the resins partially exhausted after several softening cycles, water hardness reduction is lower than obtained during the first cycle; consequently, the water in the tub will be mixed with a smaller quantity of hard water to reach the same hardness as previously.

Therefore, the parameters used by the electronic programmer relate to the residual hydrometric curve of a softening device depending on the quantity of water flowing through the softener device.

However, good operation of this system requires to know the hardness degree of the water being used, which is not always known to the user. As a result, if the hardness degree is not set exactly enough, the electronic programmer will activate softened water and hard water mixes, which are unable to reach the desired hardness degree of the water in the tub.

Actually, should inlet water be harder than programmed, then water outlet would require a smaller quantity of hard water for obtaining the desired hardness degree.

In other systems, the quantity of softened water and hard water to be mixed for a preset hardness degree is obtained by means of a plurality of water conductivity sensors, which transmit the detected values to an electronic programmer.

Based on such data, the electronic programmer activates softened water and hard water mixing for obtaining the desired water hardness.

This system requires the electrodes to be immersed in water and electrically supplied.

Even with a low voltage applied to the sensors, this will always represent a risk because the sensors are in direct contact with the water.

Moreover, nothing hinders a light calcareous layer from depositing on the sensors, which will alter water hardness detection due to an additional limestone resistivity.

It is the object of the present invention to solve the above drawbacks and provide a system for controlling the hardness of the water used in a washing machine, in particular a dishwasher, which is reliable and advantageous.

In this frame, it is a first object of the invention to provide a system for controlling the hardness of the water used in a washing machine, in particular a dishwasher, in which wash water hardness is obtained by mixing softened water with hard water, controlled by a sensor detecting the state of the softening resins of the wash water.

A second object of the invention is to provide a system for controlling the hardness of the water used in a washing machine, in particular a dishwasher, in which wash water hardness is maintained constant independently of the water hardness from the water system.

A further object of the invention is to provide a method for controlling the hardness of the water used in a washing machine, in particular a dishwasher, which is reliable and advantageous.

A further object of the invention is to provide a method for the constant maintenance of the hardness of the water used in a washing machine, in particular a dishwasher, independently of the water hardness from the water system.

In order to achieve such aims, it is the object of the present invention to provide a system and a method for controlling the hardness of the water used in a washing machine, in particular a dishwasher, comprising a sensor for detecting the state of the resins used for wash water softening, incorporating the features of the annexed claims, which form an integral part of the description herein.

Further aims, features and advantages of the present invention will become apparent from the following detailed description and annexed drawings, which are supplied by way of non limiting example, wherein:
- Fig. 1 shows schematically a prospective view of a softener device of the wash water in a dishwasher comprising a sensor for detecting resins exhaustion, according to the present invention;
- Fig. 2 shows schematically a diagram of the softener device of the wash water in a dishwasher, comprising a sensor for detecting resins exhaustion, according to the present invention;
- Fig. 3 Fig. 2 shows schematically a diagram of the softener device of the wash water in a dishwasher, comprising a sensor for detecting resins exhaustion, according to an embodiment of the present invention.

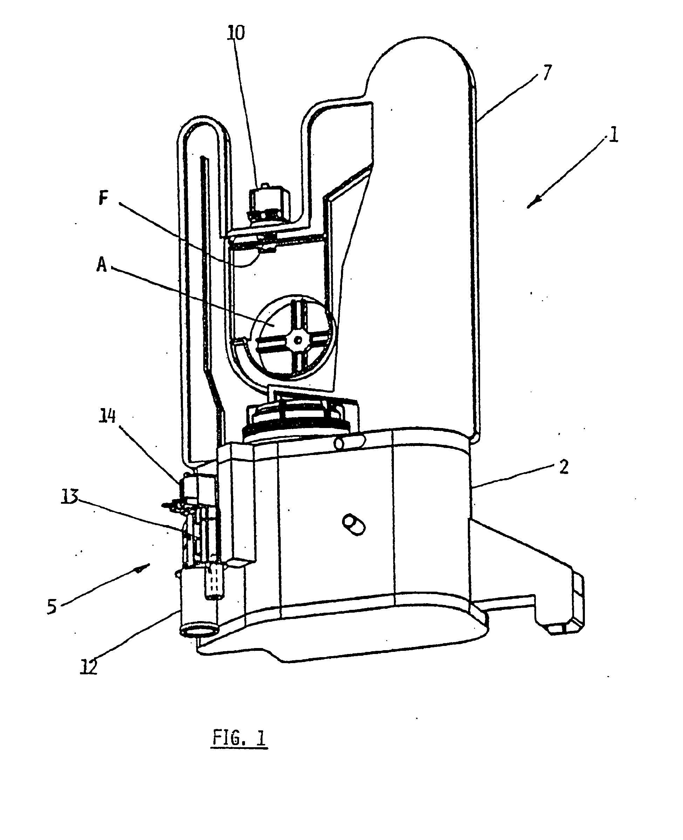

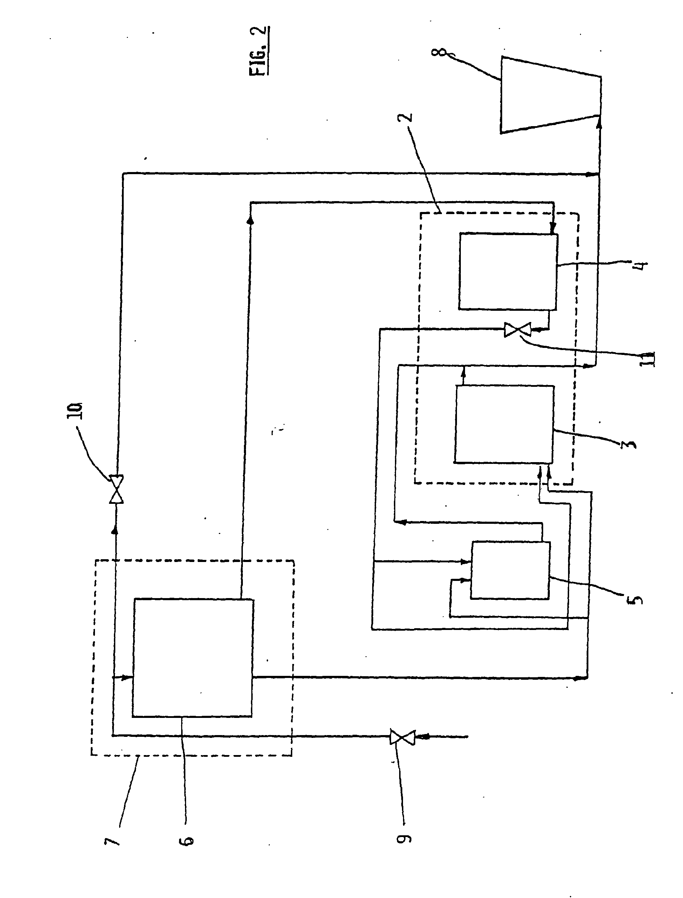

Reference 1 in the Figures 1 and 2 indicates in its whole a softener system of the wash water in a dishwasher comprising a sensor for detecting resins exhaustion, according to the present invention, as a preferred embodiment.

Reference 2 indicates the softener device containing ionic exchange resins, reference 3 a container with ionic exchange resins and reference 4 a container with brine for regenerating the ionic exchange resins; both containers 3 and 4 are hydraulically connected to each other as usually known.

Reference 5 indicates the sensor for detecting the resins state, reference 6 a small tank for the regenerating water pertaining to a multifunction device 7, hydraulically connected to the softener device 2. The sensor 5 is mechanically and hydraulically connected to the device 2. The multifunction device 7, not described being commonly known, performs several essential functions, such as a water non return device for the water system by means of an air-break in the event of a possible depression in the line, water collection for regenerating the softening resins of the wash water, venting to the environment outside, outlet column of the steam from the washing tub.

Reference 8 indicates the tub of the washing machine, reference 9 a solenoid valve for water intake from the water system and supply to the washing machine through the multifunction device 7, reference 10 a second solenoid valve located downstream the air-break or air-gap of the multifunction device 7; the solenoid valve 10 operates the opening of a hole F putting a duct of the multifunction device 7 in communication with the inside of the tub 8 and let a portion of the supply water to the washing machine flow directly in the tub 8 through a port A being apt for steam venting, located in the multifunction device 7.

Water intake in the tub 8 directly from the water system has the purpose of mixing this water with the water from the softener device 2 and obtain a preset hardness of the wash water.

Reference 11 indicates a solenoid valve for the brine flowing from the salt container 4 to both the container 3 and sensor 5 for regenerating the resins contained therein.

The sensor 5 for detecting the state of the resins is described in the Patent Application EP 122 87 35 in the name of the same applicant of the present patent application; therefore it is not further described herein, but only its main components and functions will be indicated.

The present invention is also based on the acknowledgement of the considerations described in the above Patent Application.

The sensor 5 has a body 12 containing sample resins RC on which a movable element is located; this movable element is capable of taking at least a first operating position delimiting a chamber for containing said sample resins RC and also contains a magnetic element M; outside the body 12 at least a magnetic sensor indicated with 13, in particular a reed, is activated when subject to the magnetic field of the magnetic element M associated to the movable element. Activation of the reed 13 by the magnetic element M inside the sensor 5 is caused by its displacement following a volume reduction of the sample resins inside the sensor 5 due to their exhaustion. The activated condition of the reed 13 is detected by an electronic programmer, which will start the regeneration of the softening resins of the washing machine.

Following the regeneration and their subsequent washing, the resins will resume their original volume again, and the magnetic element M move upwards so the reed 13 is no longer affected by its magnetic field; now the reed 13 is deactivated and this condition detected by the electronic programmer, which deactivates the regeneration step.

As previously mentioned, activation of the reed 13 by the magnetic element of the sensor 5 depends on the exhaustion degree of the sample resins; consequently, the more the wash water has a higher hardness degree, the faster the resins will be exhausted and the reed 13 activated.

In other words, resins regeneration activated by the electronic programmer upon detecting the condition of the reed 13 occurs more frequently when the water has a high hardness degree and less frequently when the hardness degree is a low one.

Therefore, depending on the frequency of regeneration steps instructed by the sensor 5 within a certain number of wash cycles, e.g. 10-20, the electronic programmer is able to determine the hardness degree of the water supplied from the water system to the washing machine.

Based on this parameter, the electronic programmer is also able to know the hardness degree of the water supplied to the washing tub 8 after having been softened by flowing through the resins container 3.

If the electronic programmer detects a hardness of the water supplied to the tub after flowing through the softener device below a preset value, it will activate the solenoid valve 10 for supplying a certain quantity of water from the water system to the tub.

The water from the water system mixes with the water from the softener device and will increase the hardness of the latter until the preset hardness degree is reached.

The preset hardness degree is about 7° F, which is considered an optimal value for washing the crockery without damaging the drink glasses and the risk of excessive bubbles formation, i.e. excessive foam caused by too much washing agent, as per the problems previously described.

By way of example, assuming a water hardness of 50°F for the water supplied from the water system, which is reduced to 4° F by flowing through the softener device, and a 4-litres water wash load. In the specific case the electronic programmer, knowing the water hardness from the water system and consequently also the hardness of the water from the softener device, depending on the average regeneration frequency of the last 10-20 wash cycles (in the specific instance a hardness of 50° F relating to a regeneration step every three wash cycles), will activate the solenoid valve 10 for enough time to supply a quantity of water of about 7% of the wash load to the washing tub from the water system. Thus, the water in the tub will have a hardness degree of about 7° F.

As previously mentioned, the signal to the electronic programmer for activating resins regeneration is transmitted by the sensor 5 for detecting the resins state, and the regenerations frequency depends on the water hardness of the water system; the higher the hardness, the more the resins become exhausted and also the regeneration steps will occur more frequently.

Water intake in the tub directly from the water system after activation of the solenoid valve 10 will not stop water flow to the softener device 2.

Should the water hardness degree of the water system be lower or higher than in the above example, the quantity of hard water supplied to the tub for mixing with the water from the softener device 2 will either have a higher or lower rate, respectively.

Should water hardness of the water system exceeds 70° F, e.g. 75° F, the electronic programmer, due to a higher regenerations frequency (i.e. a regeneration every 1,5 wash cycles as requested by the sensor 5 for automatic detection of the resins state), will not activate the solenoid valve 10 for hard water intake in the tub, being aware of the water hardness of the water system as previously described, and also knowing the hardness degree of the water flowing from the softener device, which in this instance will be about 7,5° F, i.e. substantially equal to the optimal value.

Should the water hardness of the water system be higher still, the sensor 5 will request a higher number of regenerations (up to 4 times each wash cycle for a water hardness of 125° F), so that the hardness of the water in the tub will be sufficiently low for avoiding the problems previously described. The hardness degree of the softened water with a starting hardness over 75° F will substantially be around 7° F; based on the regenerations requested by the sensor 5, the electronic programmer is able to know the water hardness in the tub and avoid activating the solenoid 10 for hard water intake in the tub, since the softened water has a satisfactory hardness.

Obviously, as the regeneration resins gradually loose their softening efficiency, the electronic programmer will automatically change the quantity of hard water to be supplied to the tub for its mixing with the water from the softener device, since the hardness of the latter will proportionally increase according to resins exhaustion.

As it can be noticed, after a certain number of wash cycles the electronic programmer is able to detect the water hardness degree of the water system based on the number of regenerations requested by the sensor 5 for detecting the resins state.

After acquiring this information, the electronic programmer also knows the hardness of the water from the softener device 2 and can decide whether the water from the softener device should be mixed with the water supplied directly from the water system to reach an optimal hardness degree of the wash water.

From the above description and annexed claims the feature of the present invention are clear and also its advantages will be clear.

As it can be guessed from the above description, according to the present invention a system for controlling wash water hardness in a washing machine, in particular a dishwasher, comprising a sensor for detecting the exhaustion state of the resins, is provided using the information transmitted by a device located in the washing machine.

This system allows a simple and easy hardness detection of the water supplied from the water system to the washing machine by means of a sensor for detecting the resins state.

This system based on the water hardness value of the water system also allows to known through its electronic programmer the water hardness from the softener device.

The use of this system does not require for the user to know the water hardness degree of the water system, since this value is determined by the system itself, which depending on that information will activate the necessary steps for reaching an optimal hardness of the wash water in the tub.

The above system will reduce the damaging problems to drink glasses caused by the acidity of the water having too low a hardness value and the problems related to excessive bubbles formation, i.e. excess foam, in the event of too much washing agent being used, bound to the surface tension of the water being too low.

Obviously, many changes are possible for the man skilled in the art to the system and method thereof according to the present invention, without departing from the novelty principles of the innovative idea.

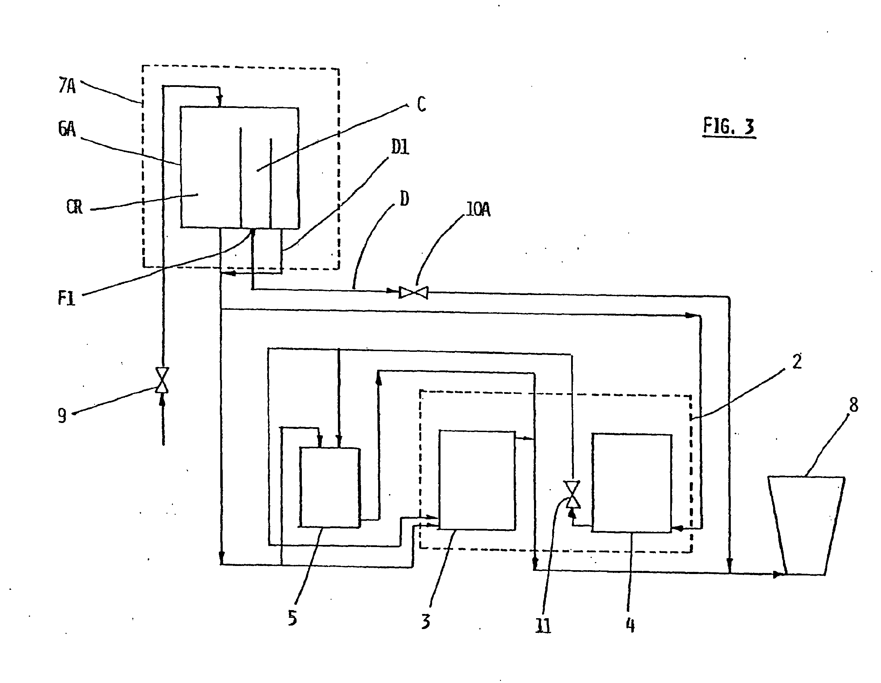

According to a possible implementation, the system for controlling wash water hardness in a washing machine, may be obtained causing the water from the water system for mixing with the water from the softener device to flow through an additional chamber C located in a multifunction device 7A, as partially represented in the schematic drawing of Fig. 3.

To this purpose, the multifunction device 7A is assumed as a closed volume device, in which water inlet is collected in a chamber to let the water flow further to the softener device 2 as soon as it is filled.

The additional chamber C is in connection with the chamber CR for collecting the regeneration water, so when the latter is filled, water will overflow to the additional chamber C. Moreover, when the chamber C is filled, excess water overflows to the intake water duct for the softener device 2.

The additional chamber C has a capacity of about 1/10 - 1/20 of the total water volume supplied for a washing.

The additional chamber C has on its bottom an outlet hole F1 for the water contained in it, which is conveyed directly to the tub 8 through a duct D without flowing through the softener device 2. The flow-rate of the water outlet hole F1 is 1/10 - 1/20 of the flow-rate of the water intake valve from the water system.

The water flow hole F1 is controlled by a solenoid valve 10A, which is controlled by the electronic programmer P, and will let all the water contained in the additional chamber C or a portion of it flow through for mixing with the water from the softener device 2.

The opening time of the hole F1 for the water to flow through, corresponding to a certain quantity of hard water to be supplied to the tub, will be controlled by the electronic controller P depending on the water hardness from the water system, so as to obtain an optimal hardness degree of the washing water.

If based on the hardness value of the water from the water system detected by the sensor 5 of the resins state, the electronic programmer P will assume that the quantity of hard water in the chamber C is not enough to reach the optimal hardness degree of the wash water, it activates the solenoid valve 9. Activation of the solenoid valve 9 causes the water from the water system to partially fill the chamber C; activation time of the solenoid valve 9 will be such not to let the water supplied to the chamber C overflow in the duct for conveying the intake water to the softener device 2.

Therefore, subsequent activation of the solenoid valve 10A will convey a certain quantity of hard water from the chamber C to the tub 8 to mix with the water already available in the washing tub 8 and reach the desired hardness. This additional hard water supply can take place several times depending on the hardness increase of the washing water to be obtained for reaching an optimal value.

The electronic programmer P will not activate the opening of the hole F1 for the water to flow through, should the sensor 5 of the resins state have detected a high hardness value of the water from the water system; consequently, the hardness of the water supplied to the tub through the softener device 2 is already hard enough and does not require a mixing with harder water.

Another implementation with respect to the previous one, may provide for removal of the solenoid valve 10A and the outlet hole F1 for the water from the additional chamber C is always open.

After filling the chamber CR for the regeneration water, the additional chamber C starts filling up. Since the flow-rate of the intake valve is clearly higher than the flow-rate of the outlet hole F1, as previously mentioned, the hard water from the chamber C flows down to the tub 8 through the duct D while the chamber C fills up. At the same time the intake water overflows in a duct D1 where it is conveyed in the tub 8 through the softener device 2, where it is softened. Excess water in the chamber C overflows in the intake water duct to the softener device.

Once filling is over and the intake valve 9 closes, the chamber C is still containing water, which will further flow into the tub for a certain time until the chamber C is emptied, increasing the hardness of the water in the tub.

Also in this instance, if based on the hardness value of the water from the water system detected by the sensor 5 of the resins, the electronic programmer P assumes that the quantity of hard water contained in the chamber C is not enough to reach the optimal hardness degree of the washing water, it will activate the intake solenoid valve 9 for hard water from the water system to flow down in the chamber C. In this embodiment, the water supplied to the chamber C will flow through the hole F1 directly to the washing tub 8.

A further implementation may be a sensor 5 of the resins state fitted with several reeds, e.g. three reeds, indicated for simplicity's sake with 13A, 13B and 13C, respectively, which are arranged on the sensor 5 at different height levels for detecting the gradual exhaustion of the resins contained in the sensor column 5; as the resins gradually become exhausted, the resins column in the sensor 5 decreases and the inner magnetic element will activate the first reed 13A located in the highest position, then the second reed 13B located at an intermediate position and finally the third reed 13C. The latter to be connected in series to the regeneration valve 11 and a regeneration cam of the electromechanical programmer will start regeneration.

The first reed 13A, located in a higher position, will be connected in series to the mixing valve 10 and a cam of the electromechanical programmer controlling hard water intake for a certain time during each supply, e.g. 30 sec, when the reed 13A in its closed position. The second reed 13B will be connected in series to the mixing solenoid valve 10 and another cam of the electromechanical programmer controlling hard water intake during each supply for a shorter time than for the cam connected in series to the first reed 13A, e.g. 10 sec, when the reed 13B in closed condition.

The different times of the hard water intake, with the activation of either the first or second reed; is due to the fact that the activation of the first 13A indicates that the resins are not very exhausted, so a higher quantity of hard water is required in the tub for obtaining a substantially optimal water hardness, i.e. about 7°F for a medium-low water hardness from the water system of 10-70°F.

Activation of the second reed 13B, following a further height decrease of the resins due to their gradual exhaustion, indicates that the water supplied to the tub from the softener device has a higher hardness; therefore a smaller quantity of hard water should be added to the tub for obtaining a suitable water hardness.

Finally, should the third reed 13C be activated, then the mixing valve 10 would never be enabled, since the hardness of the water flowing from the softener device is such not to require a further increase. Actually, activation of the third reed 13C is operated when the resins reach an exhaustion degree such to require regeneration enabling the solenoid valve 11.

It is obvious that when one of the three reeds is activated, the other ones are in their open condition, since they are not subject to the magnetic field of the magnetic element inside the sensor 5 and do not interfere with the function of the activated reed.

This implementation has the advantage of using a low cost electromechanical programmer, which ensures a substantially exact hard water intake to be mixed. Precision will be higher the more reeds are higher.

Another implementation may using a Hall linear sensor instead of the reed 5, as described in the Patent Application ITTO990738 in the name of the same applicant of the present patent application. Practically, the Hall sensor will ensure linear detection of the displacement of the magnetic element inside the sensor 5 along with the changing volume of the resins; therefore, detection is no longer given by an ON or OFF signal from a reed, but by a consistent change of the signal from it; therefore, it is obvious how the Hall linear sensor will ensure a most precise data detection.

Therefore, associating a detection sensor of the resins state equipped with a Hall linear sensor to a proportional mixing solenoid valve 10B, the signal from the Hall linear sensor can be used for the variable opening of the actuator of the proportional solenoid valve 10B. Thus, depending on the resins exhaustion level and consequent change of the signal from the Hall linear sensor, the opening of the proportional mixing solenoid valve 10B can be controlled for supplying more or less hard water for its correct mixing with the water in the tub, following step by step the exhaustion degree of the resins from a state of completely regenerated resins to their exhausted state.

A further implementation may be the use on the sensor 5 of a reed comprising two contacts, namely a normally closed contact (NC) and a normally open contact (NA) instead of just one normally open contact (NA).

The regeneration valve 1 is always connected in series to the NA contact, activated by the contact closure due to resins contraction after their exhaustion. Vice-versa, the solenoid valve 10 is connected in series to the NC contact for hard water supply to the tub and mixing with the water from the softener device.

Through this implementation, water mixing for a medium-low water hardness from the water system can be managed by the NC contact of the reed. The NC contact will in fact always be in a closed condition until the NA contact goes over to its closed condition due to resins exhaustion; the closed condition of the NC contact corresponds to the open condition of the NA contact and vice-versa, i.e. when the NA contact goes over to its closed condition, the NC contact will go over to its open condition.

Therefore, as long as the resins do not reach their exhaustion condition, the NC contact will always be in its closed condition and the mixing valve can be activated at each water intake through a cam of the electromechanical programmer.

Should water hardness from the water system be very high, then resins exhaustion would be very fast and the NA contact rapidly go over to its closed condition while the NC contact will go over to its open condition and practically never activate the mixing solenoid valve. Therefore, water hardness in the tub will only be in function of the treatment of the softener device and not of hard water mixing. This implementation provides the use of an electromechanical programmer.

Obviously, many other changes are possible for the man skilled in the art to the system and method thereof provided by the present invention, without departing from the novelty principles of the inventive idea, and it is clear that in practical actuation of the invention the components may often differ in form, size, proportions and materials employed from the ones described above by way of example, and be replaced with technical equivalent elements.

## Claims

1. A washing machine, in particular a dishwasher, comprising a washing tub (8) and a system (1) for controlling wash water hardness in said washing machine, said system (1) comprising:
- a water softening device (2) with a first container (3) containing resins (R), which reduce their softening capacity depending on the volume of the treated water, and a second container (4) containing a regenerating agent of said resins,
- first means (7,9;7A,9) for supplying wash water to be softened through said softening device (2),
- second means (10,A;C,10A) for supplying a quantity of water from the water system directly to the washing tub (8) for mixing with the wash water from the softening device in order to obtain a preset hardness of the wash water,
**characterized in that**
said system (1) comprises a sensor (5) for detecting the state of the resins (R) and said second means (10,A;C,10A) supply a quantity of water from the water system directly to the washing tub (8) depending on the hardness of the water from water system detected by said sensor (5) for detecting the state of the resins (R;RC).

2. A washing machine according to claim 1, **characterized in that** said sensor (5) comprises sample resins (RC), which reduce their volume depending on their exhaustion degree, a first magnetic element (M), in particular a permanent magnet, capable of changing its position as a function of the volume change of said sample resins (RC), at least a first magnetic sensor (13) for detecting the position of said first magnetic element (M)

3. A washing machine according to claim 1, **characterized in that** said first means (7,9;7A,9) comprise a multifunction device (7;7A), said multifunction device (7;7A) comprising at least a first chamber (6), being apt to contain water for regenerating said resins (R;RC) and at least an air-break or air-gap.

4. A washing machine according to claim 1, **characterized in that** said first means (7,9;7A,9) comprise a first solenoid valve (9), being apt for wash water intake from the water system.

5. A washing machine according to claim 1, **characterized in that** said second means (10;C,10A) comprise a second solenoid valve (10;10A) associated to said multifunction device (7), in particular located downstream the air-break or air-gap.

6. A washing machine according to claim 1, **characterized in that** said second means (10;C,10A) comprise an additional chamber (C) in said multifunction device (7), in particular said additional chamber (C) being in connection with said first chamber (6).

7. A washing machine according to claim 6, **characterized in that** said additional chamber (C) has a size being apt to contain a volume equal to 1/10-1/20 of the total volume of the wash water.

8. A washing machine according to claim 6, **characterized in that** said additional chamber (C) is in hydraulic connection with said washing tub (8) through a hole (F1) on the bottom of said additional chamber (C).

9. A washing machine according to claim 8, **characterized in that** said hole (F1) has a flow-rate substantially equal to 1/10-1/20 of said first solenoid valve (9) for water intake from the water system.

10. A washing machine according to claim 8, **characterized in that** said hydraulic connection is controlled by said second solenoid valve (10;10A).

11. A washing machine according to claim 1, **characterized in that** said system (1) provides third means (11) for activating the flow of said regenerating agent from said second container (4) to said first container (3).

12. A washing machine according to the previous claim, **characterized in that** said third means (11) comprise a third regeneration solenoid valve (11).

13. A washing machine according to claim 2, **characterized in that** said magnetic sensor (13) is a reed.

14. A washing machine according to claim 2, **characterized in that** said magnetic sensor (13) is a Hall sensor.

15. A washing machine according to claim 2, **characterized in that** said magnetic sensor (13) is a reed comprising two contacts, in particular a normally closed contact (NC) and a normally open contact (NA).

16. A washing machine according to the previous claim, **characterized in that** said normally closed contact (NC) is positioned in series to said second solenoid valve (10; 10A).

17. A washing machine according to claim 15, **characterized in that** said normally open contact (NA) is positioned in series to said third regeneration solenoid valve (11).

18. A washing machine according to claim 2, **characterized in that** said sensor (5) for detecting the resins state comprises a plurality of magnetic sensor (13A,13B,13C) located at different heights to each other.

19. A washing machine according to claims 5 and 18, **characterized in that** at least two of said magnetic sensors (13A,13B,13C) are connected each one to a cam of an electromechanical programmer for activating said second mixing solenoid valve (10;10A).

20. A washing machine according to claims 12 and 18, **characterized in that** at least one of said magnetic sensors (13A,13B,13C) is connected to a cam of said electromechanical programmer for activating said third regeneration solenoid valve (11).

21. A washing machine according to at least one of the previous claims, **characterized in that**, said system (1) comprises an electromechanical programmer, being apt to manage the signals produced by said sensor (5), in particular for mixing water from the water system with the water from said softener dispenser (2).

22. A washing machine according to at least one of the previous claims, **characterized in that** said system (1) comprises an electronic control device, being apt to manage the signals produced by said sensor (5), in particular for mixing water from the water system with the water from said softener dispenser (2).

23. A washing machine according to claim 2, **characterized in that** said sensor (5) comprises a body (12) containing said sample resins (RC), where said first magnetic element (M) is capable of changing its position as a function of the volume change of said sample resins (RC), and where said body (4) is hydraulically connected to said softener device (2), so that the water used for said softening steps and the water used for said regeneration steps is brought in contact of both said sample resins (RC) and said softening resins (R).

24. A method for controlling wash water hardness in a washing machine, in particular a dishwasher, comprising
- a water softening device (2) containing resins (R) which reduce their softening capacity depending on the volume of the treated water, said softener device (1) comprising a container (3) for said resins (R) and a container (4) containing a regenerating agent,
- a sensor (5) for detecting the state of the resins (R), said method providing at least a hard water intake step to the washing tub from the water system for mixing with the water from said device (2) for softening the washing water,
**characterized in that**
said hard water intake step from the water system is a function of the water hardness from the water system, said intake step being activated if the hardness degree of the water from the softener device (2) is below a threshold value, determined by the information obtained from said sensor (5) for detecting the resins state.

25. A method according to claim 24, **characterized in that** said sensor (5) comprises sample resins (RC), which reduce their volume depending on their exhaustion degree, where said sensor (5) comprises a movable element capable of taking at least a first operating position, in which said movable element delimits a chamber for containing said sample resins (RC), said position of said movable element being determined by at least a magnetic sensor (13).

26. A method according to claim 25, **characterized in that**, said information relates to the number of regenerations of said resins (R;RC) activated by said detection sensor (5) of the resins state within a certain period of time under control of a programmer device (P).

27. A method according to claim 24, **characterized in that** said water intake step from the water system is variable depending on the exhaustion degree of said resins (R;RC).

28. A method according to claim 24, **characterized in that** said water intake step from the water system is variable depending on the hardness degree of the water from the water system.

29. A method according to claim 24, **characterized in that** said water intake step from the water system is variable depending on the exhaustion of said resins (R;RC).

30. A method according to claim 24, **characterized in that** said water intake step from the water system is executed during each water supply to the tub

31. A method according to claim 25, **characterized in that** said position of said movable element is determined at least by a plurality of magnetic sensors (13A,13B,13C).

32. A method according to claim 31, **characterized in that** said water intake step from the water system is activated by one of said magnetic sensors (13A,13B,13C) when is in closed condition after a partial exhaustion of said resins (R;RC).

33. A method according to the previous claim, **characterized in that** the quantity of water supplied by activating said magnetic sensors (13A,13B,13C) changes depending on which magnetic sensor is in closed condition.

34. A method according to claim 32, **characterized in that** the closed condition of one of said magnetic sensors (13A,13B,13C) corresponds to an open condition of the remaining magnetic sensors (13A,13B,13C).

35. A method according to claim 29, **characterized in that**, exhaustion of said resins is detected by a linear magnetic sensor, which detects consistently the change of a signal from a magnetic element associated to said movable element in said detection sensor (5) of the resins.

## Patentansprüche

1. Waschgerät, insbesondere ein Geschirrspüler, mit einem Waschbehälter (8) und einem System (1) zur Steuerung der Waschwasserhärte in dem Waschgerät, wobei das System (1) aufweist:
- eine Wasserenthärtungseinrichtung (2) mit einem ersten Behälter (3), der Harze (R) enthält, die in Abhängigkeit von dem Volumen des behandelten Wassers ihre Enthärtungskapazität reduzieren, und einem zweiten Behälter (4), der ein Regenerationsmittel der Harze enthält,
- erste Mittel (7, 9; 7A, 9) zur Zufuhr von durch die Enthärtungseinrichtung (2) zu enthärtendes Waschwasser,
- zweite Mittel (10, A; C, 10A) zur Zufuhr einer Wassermenge aus dem Wassersystem direkt zu dem Waschbehälter (8) zum Mischen mit dem Waschwasser aus der Enthärtungseinrichtung (2), um eine vorgegebene Härte des Waschwassers zu erreichen, **dadurch gekennzeichnet, dass**
das System (1) einen Sensor (5) zum Detektieren des Zustandes der Harze (R) aufweist und die zweiten Mittel (10, A; C, 10A) eine Wassermenge aus dem Wassersystem in Abhängigkeit von der durch den Sensor (5) zum Detektieren des Zustandes der Harze (R; RC) ermittelten Härte des Wassers aus dem Wassersystem direkt dem Waschbehälter (8) zuführen.

2. Waschgerät nach Anspruch 1,
**dadurch gekennzeichnet, dass** der Sensor (5) Probeharze (RC), die ihr Volumen in Abhängigkeit von ihrem Erschöpfungsgrad reduzieren, ein erstes magnetisches Element (M), insbesondere einen Permanentmagneten, der fähig ist, seine Position als eine Funktion der Volumenänderung der Probeharze (RC) zu ändern, und zumindest einen ersten magnetischen Sensor (13) zum Ermitteln der Position des ersten magnetischen Elements (M) aufweist.

3. Waschgerät nach Anspruch 1,
**dadurch gekennzeichnet, dass** die ersten Mittel (7, 9; 7A, 9) eine Multifunktionseinrichtung (7; 7A) aufweisen, wobei die Multifunktionseinrichtung (7; 7A) zumindest eine erste Kammer (6), die geeignet ist, Wasser zur Regeneration der Harze (R; RC) zu enthalten, und zumindest eine Luftunterbrechung oder einen Luftspalt aufweist.

4. Waschgerät nach Anspruch 1,
**dadurch gekennzeichnet, dass** die ersten Mittel (7, 9; 7A, 9) ein erstes Magnetventil (9) aufweisen, das zum Waschwassereinlass aus dem Wassersystem geeignet ist.

5. Waschgerät nach Anspruch 1,
**dadurch gekennzeichnet, dass** die zweiten Mittel (10; C, 10A) ein zweites Magnetventil (10; 10A) aufweisen, das der Multifunktionseinrichtung (7) zugeordnet ist, und insbesondere stromabwärts von der Luftunterbrechung oder dem Luftspalt angeordnet ist.

6. Waschgerät nach Anspruch 1,
**dadurch gekennzeichnet, dass** die zweiten Mittel (10; C, 10A) eine zusätzliche Kammer (C) in der Multifunktionseinrichtung (7) aufweisen, wobei insbesondere die zusätzliche Kammer (C) in Verbindung mit der ersten Kammer (6) steht.

7. Waschgerät nach Anspruch 6,
**dadurch gekennzeichnet, dass** die zusätzliche Kammer (C) eine Größe hat, die geeignet ist, ein Volumen aufzunehmen, das gleich 1/10-1/20 des gesamten Waschwasservolumens ist.

8. Waschgerät nach Anspruch 6,
**dadurch gekennzeichnet, dass** die zusätzliche Kammer (C) in hydraulischer Verbindung mit dem Waschbehälter (8) durch eine Öffnung (F1) im Boden der zusätzlichen Kammer (C) steht.

9. Waschgerät nach Anspruch 8,
**dadurch gekennzeichnet, dass** die Öffnung (F1) eine Strömungsrate aufweist, die im Wesentlichen gleich 1/10-1/20 des ersten Magnetventils (9) zum Wassereinlass aus dem Wassersystem ist.

10. Waschgerät nach Anspruch 8,
**dadurch gekennzeichnet, dass** die hydraulische Verbindung durch das zweite Magnetventil (10; 10A) gesteuert wird.

11. Waschgerät nach Anspruch 1,
**dadurch gekennzeichnet, dass** das System (1) dritte Mittel (11) zur Aktivierung der Strömung des Regenerationsmittels aus dem zweiten Behälter (4) in den ersten Behälter (3) aufweist.

12. Waschgerät nach dem vorhergehenden Anspruch,
**dadurch gekennzeichnet, dass** die dritten Mittel (11) ein drittes Regeneration-Magnetventil (11) aufweisen.

13. Waschgerät nach Anspruch 2,
**dadurch gekennzeichnet, dass** der magnetische Sensor (13) ein Reed ist.

14. Waschgerät nach Anspruch 2,
**dadurch gekennzeichnet, dass** der magnetische Sensor (13) ein Hall-Sensor ist.

15. Waschgerät nach Anspruch 2,
**dadurch gekennzeichnet, dass** der magnetische Sensor (13) ein Reed ist, der zwei Kontakte aufweist, insbesondere einen normalerweise geschlossenen Kontakt (NC) und einen normalerweise offenen Kontakt (NA).

16. Waschgerät nach dem vorhergehenden Anspruch,
**dadurch gekennzeichnet, dass** der normalerweise geschlossene Kontakt (NC) in eine Reihe mit dem zweiten Magnetventil (10; 10A) angeordnet ist.

17. Waschgerät nach Anspruch 15,
**dadurch gekennzeichnet, dass** der normalerweise offene Kontakt (NA) in eine Reihe mit dem dritten Regeneration-Magnetventil (11) angeordnet ist.

18. Waschgerät nach Anspruch 2,
**dadurch gekennzeichnet, dass** der Sensor (5) zum Detektieren des Zustandes der Harze eine Vielzahl von magnetischen Sensoren (13A, 13B, 13C), die in verschiedenen Höhen zueinander angebracht sind, aufweist.

19. Waschgerät nach den Ansprüchen 5 und 18,
**dadurch gekennzeichnet, dass** zumindest zwei der magnetischen Sensoren (13A, 13B, 13C) jeweils mit einer Nocke eines elektromechanischen Programmgeräts zum Aktivieren des zweiten mischenden Magnetventils (10; 10A) verbunden sind.

20. Waschgerät nach den Ansprüchen 12 und 18,
**dadurch gekennzeichnet, dass** zumindest einer der magnetischen Sensoren (13A, 13B, 13C) mit einer Nocke des elektromechanischen Programmgerätes zum Aktivieren des dritten Regeneration-Magnetventils (11) verbunden ist.

21. Waschgerät nach mindestens einem der vorherigen Ansprüche,
**dadurch gekennzeichnet, dass** das System (1) ein elektromechanisches Programmgerät aufweist, das geeignet ist, die von dem Sensor (5) erzeugten Signale, insbesondere zum Mischen von Wasser aus dem Wassersystem mit dem Wasser aus dem Enthärtungsgerät (2), zu verarbeiten.

22. Waschgerät nach mindestens einem der vorherigen Ansprüche,
**dadurch gekennzeichnet, dass** das System (1) eine elektronische Steuerungseinrichtung aufweist, die geeignet ist, die vom Sensor (5) erzeugten Signale, insbesondere zum Mischen von Wasser aus dem Wassersystem mit dem Wasser aus dem Enthärtungsgerät (2), zu verarbeiten.

23. Waschgerät nach Anspruch 2,
**dadurch gekennzeichnet, dass** der Sensor (5) einen Körper (12) aufweist, der die Probeharze (RC) enthält, wobei das erste magnetische Element (M) fähig ist, seine Position als Funktion der Volumenänderung der Probeharze (RC) zu ändern, und wobei der Körper (4) hydraulisch mit der Enthärtungseinrichtung (2) verbunden ist, so dass das für die Enthärtungsschritte verwendete Wasser und das für die Regenerationsschritte verwendete Wasser in Kontakt mit beiden, den Probeharzen (RC) und den Enthärtungsharzen (R), gebracht werden.

24. Verfahren zum Steuern der Waschwasserhärte in einem Waschgerät, insbesondere in einem Geschirrspüler mit:
- einer Wasserenthärtungseinrichtung (2), die Harze (R) enthält, die ihre Enthärtungskapazität in Abhängigkeit von dem Volumen des behandelten Wassers reduzieren, wobei die Enthärtungseinrichtung (1) einen Behälter (3) für die Harze (R) und einen das Regenerationsmittel enthaltenden Behälter (4) aufweist,
- einem Sensor (5) zum Ermitteln des Zustandes der Harze (R),
wobei das Verfahren zumindest einen Hartwassereinlassschritt zum Waschbehälter vom Wassersystem zum Mischen mit dem Wasser aus der Einrichtung (2) zum Enthärten des Waschwassers bereitstellt,
**dadurch gekennzeichnet, dass**
der Hartwassereinlassschritt aus dem Wassersystem eine Funktion der Wasserhärte aus dem Wassersystem ist, wobei der Einlassschritt aktiviert wird, wenn der Härtegrad des Wassers aus der Enthärtungseinrichtung (2) unterhalb eines Schwellwertes liegt, der durch die Information bestimmt wird, die von dem Sensor (5) zum Detektieren des Zustandes der Harze erlangt wird.

25. Verfahren nach Anspruch 24,
**dadurch gekennzeichnet, dass** der Sensor (5) Probeharze (RC) aufweist, die ihr Volumen abhängig von ihrem Erschöpfungsgrad reduzieren, wobei der Sensor (5) ein bewegliches Element aufweist, das zumindest eine erste Betriebsposition einnehmen kann, in welcher das bewegliche Element eine Kammer zum Aufbewahren der Probeharze (RC) abgrenzt, wobei die Position des beweglichen Elements durch zumindest einen magnetischen Sensor (13) bestimmt wird.

26. Verfahren nach Anspruch 25,
**dadurch gekennzeichnet, dass** sich die Information auf die Zahl der Regenerationen der Harze (R; RC) bezieht, die durch den Sensor (5) zum Detektieren des Zustandes der Harze innerhalb eines bestimmten Zeitabschnitts unter Kontrolle einer Programmeinrichtung (P) aktiviert werden.

27. Verfahren nach Anspruch 24,
**dadurch gekennzeichnet, dass** der Wassereinlassschritt aus dem Wassersystem in Abhängigkeit vom Erschöpfungsgrad der Harze (R; RC) variabel ist.

28. Verfahren nach Anspruch 24,
**dadurch gekennzeichnet, dass** der Wassereinlassschritt aus dem Wassersystem in Abhängigkeit von dem Härtegrad des Wassers aus dem Wassersystem variabel ist.

29. Verfahren nach Anspruch 24,
**dadurch gekennzeichnet, dass** der Wassereinlassschritt aus dem Wassersystem in Abhängigkeit von der Erschöpfung der Harze (R; RC) variabel ist.

30. Verfahren nach Anspruch 24,
**dadurch gekennzeichnet, dass** der Wassereinlassschritt aus dem Wassersystem während jeder Wasserzufuhr zu dem Waschbehälter erfolgt.

31. Verfahren nach Anspruch 25,
**dadurch gekennzeichnet, dass** die Position des beweglichen Elements durch zumindest eine Vielzahl von magnetischen Sensoren (13A, 13B, 13C) bestimmt wird.

32. Verfahren nach Anspruch 31,
**dadurch gekennzeichnet, dass** der Wassereinlassschritt aus dem Wassersystem durch einen der magnetischen Sensoren (13A, 13B, 13C) aktiviert wird, wenn er nach einer partiellen Erschöpfung der Harze (R; RC) in geschlossenem Zustand ist.

33. Verfahren nach dem vorherigen Anspruch,
**dadurch gekennzeichnet, dass** sich die Menge des Wassers, das durch das Aktivieren der magnetischen Sensoren (13A, 13B, 13C) zugeführt wird in Abhängigkeit davon, welcher magnetische Sensor sich in geschlossenem Zustand befindet, ändert.

34. Verfahren nach Anspruch 32,
**dadurch gekennzeichnet, dass** der geschlossene Zustand von einem der magnetischen Sensoren (13A, 13B, 13C) mit einem offenen Zustand der restlichen magnetischen Sensoren (13A, 13B, 13C) korrespondiert.

35. Verfahren nach Anspruch 29,
**dadurch gekennzeichnet, dass** die Erschöpfung der Harze durch einen linearen magnetischen Sensor detektiert wird, der durchgehend die Änderung eines Signals von einem magnetischen Element ermittelt, das dem beweglichen Element in dem Detektionssensor (5) der Harze zugeordnet ist.

## Revendications

1. Machine à laver, en particulier lave-vaisselle, comportant une cuve de lavage (8) et un système (1) de commande de la dureté de l'eau de lavage dans ladite machine à laver, ledit système (1) comprenant :
- un dispositif adoucissant l'eau (2) comportant un premier conteneur (3) contenant des résines (R), qui réduisent leur capacité adoucissante en fonction du volume de l'eau traitée, et un second conteneur (4) contenant un agent de régénération desdites résines,
- des premiers moyens (7, 9 ; 7A,9) destinés à amener l'eau de lavage à adoucir par ledit dispositif adoucissant l'eau (2),
- des seconds moyens (10,A ; C, 10A) destinés à amener une quantité d'eau depuis le système d'eau directement vers la cuve de lavage (8) pour un mélange avec l'eau de lavage provenant du dispositif adoucissant (2) afin d'obtenir une dureté prédéfinie de l'eau de lavage,
**caractérisée en ce que** ledit système (1) comprend un capteur (5) destiné à détecter l'état des résines (R) et **en ce que** les seconds moyens (10,A ; C, 10A) amènent une quantité d'eau depuis le système d'eau directement vers la cuve de lavage (8) en fonction de la dureté de l'eau provenant du système d'eau et détectée par ledit capteur (5) destiné à détecter l'état des résines (R ; RC).

2. Machine à laver selon la revendication 1, **caractérisée en ce que** ledit capteur (5) comprend des résines échantillon (RC), qui réduisent leur volume en fonction de leur degré d'épuisement, un premier élément magnétique (M), en particulier un aimant permanent, capable de modifier sa position en fonction de la modification de volume desdites résines d'échantillon (RC), et au moins un premier capteur magnétique (13) destiné à détecter la position dudit premier élément magnétique (M).

3. Machine à laver selon la revendication 1, **caractérisée en ce que** lesdits premiers moyens (7, 9 ; 7A, 9) comprennent un dispositif multifonctions (7 ; 7A), ledit dispositif multifonctions (7 ; 7A) comprenant au moins une première chambre (6) apte à contenir de l'eau pour régénérer lesdites résines (R ; RC) et au moins une rupture d'air ou un intervalle d'air.

4. Machine à laver selon la revendication 1, **caractérisée en ce que** lesdits premiers moyens (7, 9 ; 7A, 9) comprennent une première électrovanne (9) apte à la prise d'eau de lavage depuis le système d'eau.

5. Machine à laver selon la revendication 1, **caractérisée en ce que** lesdits seconds moyens (10 ; C, 10A) comprennent une seconde électrovanne (10 ; 10A) associée audit dispositif multifonctions (7), en particulier située en aval de la rupture d'air ou intervalle d'air.

6. Machine à laver selon la revendication 1, **caractérisée en ce que** lesdits seconds moyens (10 ; C, 10A) comprennent une chambre supplémentaire (C) dans ledit dispositif multifonctions (7), ladite chambre supplémentaire (C) étant en relation avec ladite première chambre (6).

7. Machine à laver selon la revendication 6, **caractérisée en ce que** ladite chambre supplémentaire (C) a une taille qui permet de contenir un volume égal à 1/10 à 1/20 du volume total de l'eau de lavage.

8. Machine à laver selon la revendication 6, **caractérisée en ce que** ladite chambre supplémentaire (C) est en relation hydraulique avec ladite cuve de lavage (8) via un orifice (F1) sur le bas de ladite chambre supplémentaire (C).

9. Machine à laver selon la revendication 8, **caractérisée en ce que** ledit orifice (F1) a un débit essentiellement égal à 1/10 à 1/20 de celui de ladite première électrovanne (9) pour la prise d'eau depuis le système d'eau.

10. Machine à laver selon la revendication 8, **caractérisée en ce que** ladite connexion hydraulique est commandée par ladite seconde électrovanne (10 ; 10A).

11. Machine à laver selon la revendication 1, **caractérisée en ce que** ledit système (1) fournit des troisièmes moyens (11) permettant d'activer l'écoulement dudit agent régénérant depuis ledit second conteneur (4) vers ledit premier conteneur (3).

12. Machine à laver selon la revendication précédente, **caractérisée en ce que** lesdits troisièmes moyens (11) comportent une troisième électrovanne de régénération (11).

13. Machine à laver selon la revendication 2, **caractérisée en ce que** ledit capteur magnétique (13) est un capteur à contacts.

14. Machine à laver selon la revendication 2, **caractérisée en ce que** ledit capteur magnétique (13) est un capteur à effet Hall.

15. Machine à laver selon la revendication 2, **caractérisée en ce que** ledit capteur magnétique (13) est un capteur à contacts comportant deux contacts, en particulier un contact (NC) normalement fermé et un contact (NO) normalement ouvert.

16. Machine à laver selon la revendication précédente, **caractérisée en ce que** ledit contact normalement fermé (NC) est positionné en série avec la seconde électrovanne (10 ; 10A).

17. Machine à laver selon la revendication 15, **caractérisée en ce que** ledit contact normalement ouvert (NO) est positionné en série avec ladite troisième électrovanne de régénération (11).

18. Machine à laver selon la revendication 2, **caractérisée en ce que** ledit capteur (5) de détection de l'état des résines comprend plusieurs capteurs magnétiques (13A, 13B, 13C) situés à différentes hauteurs les uns par rapport aux autres.

19. Machine à laver selon les revendications 5 et 18, **caractérisée en ce qu'**au moins deux desdits capteurs magnétiques (13A, 13B, 13C) sont connectés chacun à une came d'un programmateur électromécanique destiné à activer ladite seconde électrovanne de mélange (10 ; 10A).

20. Machine à laver selon les revendications 12 et 18, **caractérisée en ce qu'**au moins un desdits capteurs magnétiques (13A, 13B, 13C) est connecté à une came dudit programmateur électromécanique destiné à activer ladite troisième électrovanne de régénération (11).

21. Machine à laver selon au moins une des revendications précédentes, **caractérisée en ce que** ledit système (1) comprend un programmateur électromécanique apte à gérer les signaux produits par ledit capteur (5), en particulier pour mélanger l'eau provenant du système d'eau avec l'eau provenant dudit distributeur adoucissant (2).

22. Machine à laver selon au moins l'une des revendications précédentes, **caractérisée en ce que** ledit système (1) comprend un dispositif électronique de commande apte à gérer les signaux produits par ledit capteur (5), en particulier pour mélanger l'eau provenant du système d'eau avec l'eau provenant dudit distributeur adoucissant (2).

23. Machine à laver selon la revendication 2, **caractérisée en ce que** ledit capteur (5) comprend un corps (12) contenant lesdites résines échantillon (RC), ledit premier élément magnétique (M) étant capable de modifier sa position en fonction de la modification de volume desdites résines échantillon (RC), et ledit corps (4) étant en relation hydraulique avec ledit dispositif adoucissant (2), si bien que l'eau utilisée pour lesdites étapes d'adoucissement et l'eau utilisée pour lesdites étapes de régénération sont mises en contact desdites résines échantillon (RC) et desdites résines adoucissantes (R).

24. Méthode de commande de la dureté de l'eau de lavage dans une machine à laver, en particulier un lave-vaisselle, comprenant
- un dispositif adoucissant l'eau (2) contenant des résines (R) qui réduisent leur capacité adoucissante en fonction du volume de l'eau traitée, ledit dispositif adoucissant (1) comprenant un conteneur (3) pour lesdites résines (R) et un conteneur (4) contenant un agent régénérant,
- un capteur (5) destiné à détecter l'état des résines (R),
ladite méthode fournissant au moins une étape de prise d'eau dure vers la cuve de lavage depuis le système d'eau pour un mélange avec l'eau dudit dispositif (2) adoucissant l'eau de lavage,
**caractérisée en ce que** ladite étape de prise d'eau dure du système d'eau est une fonction de la dureté de l'eau du système d'eau, ladite étape de prise étant activée si le degré de dureté de l'eau provenant du dispositif adoucissant (2) est inférieur à une valeur de seuil, déterminée par les informations obtenues par ledit capteur (5) de détection de l'état des résines.

25. Méthode selon la revendication 24, **caractérisée en ce que** ledit capteur (5) comprend des résines échantillon (RC) qui réduisent leur volume en fonction de leur degré d'épuisement, ledit capteur (5) comprenant un élément mobile capable de prendre au moins une première position de fonctionnement dans laquelle ledit élément mobile délimite une chambre contenant lesdites résines échantillon (RC), ladite position dudit élément mobile étant déterminée par au moins un capteur magnétique (13).

26. Méthode selon la revendication 25, **caractérisée en ce que** lesdites informations concernent le nombre de régénérations desdites résines (R ; RC) activées par ledit capteur de détection (5) de l'état des résines pendant une certaine période de temps et sous le contrôle du dispositif de programmation (P).

27. Méthode selon la revendication 24, **caractérisée en ce que** ladite étape de prise d'eau dudit système d'eau varie en fonction du degré d'épuisement desdites résines (R ; RC).

28. Méthode selon la revendication 24, **caractérisée en ce que** ladite étape de prise d'eau dudit système d'eau varie en fonction du degré de dureté de l'eau provenant du système d'eau.

29. Méthode selon la revendication 24, **caractérisée en ce que** ladite étape de prise d'eau dudit système d'eau varie en fonction du degré d'épuisement desdites résines (R ; RC).

30. Méthode selon la revendication 24, **caractérisée en ce que** ladite étape de prise d'eau dudit système d'eau est exécutée pendant chaque apport d'eau vers la cuve.

31. Méthode selon la revendication 25, **caractérisée en ce que** ladite position dudit élément mobile est déterminée au moins par plusieurs capteurs magnétiques (13A, 13B, 13C).

32. Méthode selon la revendication 31, **caractérisée en ce que** ladite étape de prise d'eau du système d'eau est activée par un desdits capteurs magnétiques (13A, 13B, 13C) lorsqu'il se trouve en position fermée après un épuisement partiel desdites résines (R ; RC).

33. Méthode selon la revendication précédente, **caractérisée en ce que** la quantité d'eau amenée par l'activation desdits capteurs magnétiques (13A, 13B, 13C) change en fonction du capteur magnétique qui se trouve à l'état fermé.

34. Méthode selon la revendication 32, **caractérisée en ce que** l'état fermé d'un des capteurs magnétiques (13A, 13B, 13C) correspond à un état ouvert des capteurs magnétiques restants (13A, 13B, 13C).

35. Méthode selon la revendication 29, **caractérisée en ce que** l'épuisement desdites résines est détecté par un capteur magnétique linéaire, qui détecte de façon cohérente la modification d'un signal d'un élément magnétique associé audit élément mobile dans ledit capteur de détection (5) des résines.
